(19) Europäisches Patentamt
European Patent Office
Office européen des brevets

(11) **EP 2 578 979 A1**

(12) **EUROPÄISCHE PATENTANMELDUNG**

(43) Veröffentlichungstag:
**10.04.2013 Patentblatt 2013/15**

(51) Int Cl.:
***F28D 17/00*** *(2006.01)*     ***F28D 20/00*** *(2006.01)*

(21) Anmeldenummer: **11184259.7**

(22) Anmeldetag: **07.10.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **ED. ZÜBLIN AG**
**D-70567 Stuttgart (DE)**

(72) Erfinder:
• **Dr. Mayer, Peter-Michael**
  **70192 Stuttgart (DE)**
• **Dr. Niklasch, Christoph**
  **71139 Ehningen (DE)**

Bemerkungen:
Geänderte Patentansprüche gemäss Regel 137(2) EPÜ.

(54) **Wärmespeichermittel und Wärmespeicher**

(57)     Es werden ein Wärmespeicher (33) und Wärmespeichermittel (22) beschrieben. Der Wärmespeicher (33) umfasst mindestens einen Wärmespeichermittel (22) beherbergenden und zum Austausch von Wärme mit den Wärmespeichermitteln (22) zumindest zeitweilig von einem Arbeitsfluid (27) durchströmten Wärmespeicherraum (23). Die zum Austausch von Wärme mit dem Arbeitsfluid (27) sowie zur wenigstens zeitweiligen Speicherung der Wärme von deren Zufuhr bis zu deren Entnahme durch das Arbeitsfluid (27) vorgesehenen Wärmespeichermittel (22) umfassen eine Schüttung (24) aus einander berührenden Schüttungselementen (25), zwischen denen die Schüttung (24) miteinander kommunizierende, durchgehende Poren (26) aufweist, welche von dem Arbeitsfluid (27) zumindest zeitweilig durchströmt werden. Zumindest ein Teil der Schüttungselemente (25) sind als Ausgleichselemente (28, 29, 30) ausgeführt, welche Bewegungsmöglichkeiten der Schüttungselemente (25) in der Schüttung (24) schaffen und so eine gegenseitige Zerstörung der Schüttungselemente (25) aufgrund von Volumenänderungen verursacht durch Temperaturänderungen der Wärmespeichermittel (22) verhindern.

Fig. 6 b)

**Beschreibung**

Technisches Gebiet

Die Erfindung betrifft Wärmespeichermittel gemäß dem Oberbegriff des Anspruchs 1 und einen Wärmespeicher gemäß dem Oberbegriff des Anspruchs 2.

Stand der Technik

Allgemein werden Energiespeicher benötigt, beispielsweise um momentan überschüssige Energie z.B. in Form von Wärme und/oder mechanischer Energie und/oder potentieller Energie und/oder chemischer Energie zwischenzuspeichern.

Solche Energiespeicher können unmittelbar in Kraftwerken und/oder in Verbindung mit diskontinuierlich zur Verfügung stehenden Energiequellen und/oder in Verbindung mit diskontinuierlich Energie verbrauchenden Energiesenken vorgesehen sein, insbesondere in regenerative Energiequellen nutzenden Kraftwerken, um zumindest zeitweilig überschüssige Energie bis zu deren Bedarf zwischenzuspeichern. So können beispielsweise in solarthermischen Kraftwerken als Wärmespeicher ausgeführte Energiespeicher vorgesehen sein, welche bei hoher Sonneneinstrahlung und/oder geringer Stromabnahme momentan überschüssige Energie in Form von Wärme speichern, und beispielsweise in photovoltaischen Kraftwerken als Akkumulatoren ausgeführte Energiespeicher vorgesehen sein, welche bei hoher Sonneneinstrahlung und/oder geringer Stromabnahme momentan überschüssige Energie in Form von chemischer Energie speichern.

Beispielsweise um wetterabhängige regenerative Energiequellen, wie etwa Windkraft und/oder Solarenenergie, zur Spitzenlast- und/oder Mittellast- und/oder Grundlast-Stromversorgung vorzusehen, werden Speicherkraftwerke benötigt, welche momentan überschüssige Energie, wie etwa die Energie von während günstiger Wetterbedingungen gegenüber dem Stromverbrauch zuviel produzierten Stroms zum Ausgleich während ungünstiger Wetterbedingungen gegenüber dem Stromverbrauch zuwenig produzierten Stroms speichern können. Dabei kann auch längerfristig vorgesehen sein Energiemengen vorzuhalten, die beispielsweise Nachfrageunterschieden zwischen Sommer und Winter ausgleichen können.

Eingangs erwähnte Energiespeicher können in Form von Speicherkraftwerken ausgeführt sein oder ein oder mehrere Teile eines Speicherkraftwerks bilden, beispielsweise um die Energie von während Zeiten geringen Stromverbrauchs zuviel produzierten Stroms zumindest so lange zwischenzuspeichern, bis der Stromverbrauch den momentan erzeugten Strom zu übersteigen droht.

Aufgrund der langjährigen Erfahrung mit Strömungsmaschinen zur Energiegewinnung im Allgemeinen kommen in Speicherkraftwerken bevorzugt Energiespeicher zum Einsatz, welche momentan überschüssige Energie in Form von potentieller Energie speichern, die dann mit Hilfe von Strömungsmaschinen beispielsweise wieder in elektrischen Strom umgewandelt werden kann.

Ein Druckluftspeicherkraftwerk ist ein Beispiel für ein solches Speicherkraftwerk.

Im Unterschied zu einem für den gleichen Einsatzzweck entwickelten Pumpspeicherkraftwerk, bei dem zu Schwachlastzeiten in einen hoch gelegenen Speichersee gepumptes Wasser über Fallrohre nach unten fließt und dabei mittels einer oder mehrerer Turbinen einen oder mehrere Generatoren antreibt, nutzt ein Druckluftspeicherkraftwerk die Energie, die in verdichteter bzw. komprimierter Luft steckt. In Schwachlastzeiten wird hierbei mit einem elektrisch angetriebenen Verdichter Luft verdichtet und in einem Druckluftspeicher gespeichert, beispielsweise in einer unterirdischen Kaverne oder Mine. In Zeiten z.B. hoher Stromnachfrage, wie etwa bei Spitzenlast, wird die Druckluft aus dem Druckluftspeicher entnommen und in einer Turbine entspannt, die ihre Leistung an einen gekoppelten Generator abgibt.

Dabei stellt ein Druckluftspeicherkraftwerk kein Kraftwerk im herkömmlichen Sinne dar, da bei der Verdichtung der Luft mehr Energie aufgewandt werden muss, als bei deren Entspannung wieder entnommen werden kann. Ein Druckluftspeicherkraftwerk ist demnach vielmehr ein Energiespeicher mit einem oder mehreren Druckluftspeichern und angeschlossener Turbine und Generator zur Bereitstellung elektrischen Stroms zu Zeiten der Spitzenlast.

Bekannte Probleme von Druckluftspeicherkraftwerken sind deren eingeschränkter Gesamtwirkungsgrad bedingt einerseits durch hohe Verluste aufgrund beabsichtigter und unbeabsichtigter Wärmeabgabe bei der Erzeugung und Speicherung der Druckluft sowie andererseits durch gegebenenfalls vorgesehene, der Gefahr einer Vereisung der Turbine bei der Entspannung der Druckluft entgegnwirkender konventioneller Maßnahmen. Die Gründe hierfür sind folgende:

- Die Verdichtung bzw. Kompression der Luft führt zu einer Erhöhung deren Temperatur. Näherungsweise kann hierbei von einer adiabatischen Zustandsänderung ausgegangen werden, bei der die vom Verdichter an der Luft verrichtete Arbeit direkt die innere Energie der Luft und damit deren Temperatur erhöht. Hierbei können je nach thermodynamischem Ausgangszustand der Luft, Verdichterleistung und Gesamtdruckverhältnis aller Stufen des Verdichters Temperaturen von weit über 1000°C erreicht werden. Um die Komponenten der Anlage vor diesen Temperaturen zu schützen ist bekannt, die Temperatur der verdichteten Luft über beispielsweise kühlmitteldurchströmte Wärmetauscher an die Umgebung abzugeben.

- Abhängig von der Dauer des Verbleibs der verdichteten Luft bis zu deren Wiederentnahme im Druckluftspeicher findet eine Abgabe eines Teils der Wärme über die Wandungen des Druckluftspeichers an die Umgebung statt. Ist der Druckluftspeicher beispielsweise eine Kaverne oder eine Mine wird die Wärme an das umgebende Mineral bzw. Gestein abgegeben.

- Die Luft kühlt bei der Expansion in der Turbine stark ab. Hierdurch kann in der Luft enthaltene Restfeuchtigkeit gefrieren und die Turbine vereisen. Um dies zu verhindern muss die Luft vor oder während der Entspannung erwärmt werden, beispielsweise durch konventionelles Zuheizen mittels eines Brennstoffs, wie etwa Erdgas. Hierbei wird der Brennstoff der Luft bei deren Entnahme aus dem Druckluftspeicher beigemengt. Das Brennstoff-Luft-Gemisch wird anschließend vor dem Eintritt in eine Gasturbine entzündet, welche den Generator antreibt.

Zur Verbesserung des Gesamtwirkungsgrads von Druckluftspeicherkraftwerken ist bekannt, die Restwärme der der Gasturbine entweichenden Abgase mittels eines Rekuperators der aus dem Druckluftspeicher entnommenen Luft noch vor deren Eintritt in die Gasturbine zuzuführen. Hierdurch wird zumindest der Brennwert des Brennstoff-Luft-Gemischs besser ausgeschöpft.

Darüber hinaus sind so genannte adiabatische Druckluftspeicherkraftwerke bekannt, bei denen zumindest zum Teil die bei der Verdichtung der Luft erzeugte Wärme unter Abkühlung der verdichteten Luft bei deren Zufuhr zum Druckluftspeicher einem Wärmespeicher zugeführt wird und der Wärmespeicher bei der Entnahme der Druckluft aus dem Druckluftspeicher wieder entladen wird, indem die in dem Wärmespeicher gespeicherte Wärme der unter Entspannung durch die Turbine strömenden Luft wieder zugeführt wird. Bei der Entnahme aus dem Druckluftspeicher durchströmt die komprimierte Luft hierbei den Wärmespeicher, erhitzt sich und gelangt erst dann in die Turbine. Dadurch wird weniger oder idealerweise kein Brennstoff zur Erwärmung der Luft benötigt. Während der Expansion in der Turbine kühlt die Luft auf Umgebungstemperatur ab. Ein adiabatisches Druckluftspeicherkraftwerk erreicht so im Vergleich zu einem zuvor beschriebenen Druckluftspeicherkraftwerk mit Gasturbine einen höheren Wirkungsgrad. Entgegen ihrer Bezeichnung führen adiabatische Druckluftspeicherkraftwerke jedoch keine adiabatischen Zustandsänderungen aus, sie kommen durch die Rückführung der bei der Verdichtung erzeugten Wärme an die aus dem Druckluftspeicher entnommene Luft dem Wirkungsgrad adiabatischer Zustandsänderungen lediglich näher.

Ein adiabatisches Druckluftspeicherkraftwerk verfügt dabei über wenigstens zwei eingangs erwähnte Energiespeicher. Ein erster Energiespeicher umfasst den beispielsweise durch eine oder mehrere Kavernen zur Aufnahme und Speicherung von unter Druck stehender Luft gebildeten Druckluftspeicher. Ein zweiter Energiespeicher umfasst wenigstens einen Wärmespeicher.

Damit ein Wärmespeicher seine Wärmespeicherfunktion erfüllen kann, weist dieser beispielsweise in einem Behälterinnenraum beherbergte Wärmespeichermittel auf. Die Wärmespeichermittel sind in der Lage, einem Arbeitsfluid Wärme zu entnehmen, die Wärme über einen bestimmten Zeitraum hinweg zu speichern und anschließend einem Arbeitsfluid wieder zuzuführen. Dabei wird den Wärmespeichermitteln zunächst vermittels des Arbeitsfluids Wärme zugeführt, welche anschließend von den Wärmespeichermitteln möglichst verlustarm gespeichert wird, um zumindest einen Teil der gespeicherte Wärme den Wärmespeichermitteln bei Bedarf vermittels des Arbeitsfluids wieder zu entnehmen.

Die Wärmespeichermittel können derart ausgebildet sein, dass sie unmittelbar von dem die Wärmezufuhr zum Wärmespeicher und die Wärmeentnahme aus dem Wärmespeicher besorgenden Arbeitsfluid durchströmt sind. Bei dem Arbeitsfluid kann es sich beispielsweise direkt um die unter Druck stehende Luft eines Druckluftspeicherkraftwerks handeln.

Hierzu können die Wärmespeichermittel im Behälterinnenraum eines auch als Containment bezeichneten Druckbehälters untergebracht sein.

Durch EP 1 857 614 A2 ist ein als ein Wärmespeicher für ein adiabatisches Druckluftspeicherkraftwerk ausgeführter und für diesen Zweck Wärmespeichermittel beherbergender Druckbehälter bekannt. Dieser Wärmespeicher weist einen von dem Druckbehälter umschlossenen Wärmespeicherraum auf, in welchem die Wärmespeichermittel untergebracht sind. Zur Zufuhr und zur Entnahme von Wärme kann der Wärmespeicherraum von einem durch einer Kaverne von einem Verdichter oder einer Turbine von der Kaverne zuzuführende Druckluft gebildeten Arbeitsfluid durchströmt werden. Der Druckbehälter dieses Wärmespeichers weist einen vorgespannten Betonmantel aus hochfestem Beton mit Stahlkappe auf. Die Vorspannung erfolgt horizontal und vertikal bevorzugt durch Spannglieder aus Kohlefasern. Eine hitzebeständige Schicht und eine erste thermisch isolierende Schicht trennen die Wärmespeichermittel vom temperaturempfindlicheren Beton. Zwischen der ersten thermisch isolierenden Schicht und dem Betonmantel bzw. der Stahlkappe kann sich darüber hinaus noch eine zweite thermisch isolierende Schicht befinden, falls die erste thermisch isolierende Schicht nicht selbst in ausreichendem Maße thermisch isolierend wirkt. Bei der zweiten thermisch isolierenden Schicht kann es sich um eine Luftschicht handeln. Zur Kühlung der Innenseite des Betonmantels kann darüber hinaus in dem Betonmantel auch noch ein Kühlmittelkreislauf vorgesehen sein. Bei dem verwendeten Kühlmittel handelt es sich bevorzugt um Wasser. Die Wärmespeichermittel bestehen aus Formsteinen aus einem keramischen Material. Die Formsteine weisen Durchführungen in Form von Strömungskanalabschnitten für die unter Druck stehende Luft auf. Die Wärmespeichermittel haben wegen der Änderung deren Volumens bei Temperaturwechseln keinen direkten Kontakt zu dem den Behälterinnenraum umgebenden Betonmantel und auch nicht zu den die Wärmespeichermittel vom temperaturempfindlicheren Beton trennenden hitzebeständigen und thermisch isolierenden Schichten. Damit die ständigen Temperaturzyklen nicht zu einer Verschiebung der Formsteine und deren Strömungskanalabschnitte relativ zueinander führen, können die Formsteine mit Nut und Feder versehen sein, mit denen sie ineinander greifen.

Nachteilig an den Wärmespeichermitteln dieses Wärmespeichers ist deren hoher Herstellungsaufwand sowie dessen nicht zufrieden stellende Nutzung eines zur Verfügung stehenden begrenzten Bauraums, beispielsweise eines von einem Druckbehälter umschlossenen Behälterinnenraums. Der hohe Herstellungsaufwand ist unter anderem bedingt durch die in den aus Formsteinen hergestellten Wärmespeichermitteln vorzusehenden und für die zur Durchströmung mit dem Arbeitsfluid bzw. der Druckluft vorgesehenen Strömungskanäle sowie durch den hohen Aufwand beim Einbringen und Zusammensetzen der Formsteine, wo darauf geachtet werden muss, dass die in den einzelnen Formsteinen vorgesehenen Strömungskanalabschnitte möglichst stoß- und versatzfrei ineinander übergehen, um Durchströmungsverluste so gering wie nur möglich zu halten. Die nicht zufrieden stellende Nutzung des zur Verfügung stehenden begrenzten Bauraums ist unter Anderem darauf zurückzuführen, dass zwischen den Wärmespeichermitteln und den Bauraum umgebenden Wandungen ein Abstand einzuhalten ist, um die durch die Wärmeausdehnung bei unterschiedlichen Betriebstemperaturen verursachten Volumenschwankungen der Wärmespeichermittel auszugleichen. Stünden die Wärmespeichermittel aus Formstein unmittelbar mit den Wandungen in Kontakt, käme es aufgrund der zyklischen Volumenschwankungen nach und nach zu einer Zerstörung der Wärmespeichermittel einhergehend mit einer Verdichtung des dadurch entstehenden Schutts, was dann auf Dauer zu einer Zerstörung der umgebenden Wandungen führen würde.

## Aufgabe der Erfindung

Der Erfindung liegt die Aufgabe zugrunde, bevorzugt für einen Wärmespeicher, der beispielsweise Teil eines Energiespeichers, beispielsweise für ein Druckluftspeicherkraftwerk sein kann, geeignete Wärmespeichermittel sowie einen beispielsweise für ein Druckluftspeicherkraftwerk geeigneten Wärmespeicher zu entwickeln, welche ausgehend vom Stand der Technik einfach und kostengünstig hergestellt werden können und darüber hinaus eine verbesserte Bauraumnutzung aufweisen.

## Darstellung der Erfindung

Die Aufgabe wird gelöst durch Wärmespeichermittel mit den Merkmalen des Anspruchs 1 bzw. durch einen Wärmespeicher mit den Merkmalen des Anspruchs 2.

Ein erster Gegenstand der Erfindung betrifft demnach Wärmespeichermittel zum Austausch von Wärme mit einem Arbeitsfluid sowie zur wenigstens zeitweiligen Speicherung der Wärme von deren Zufuhr bis zu deren Entnahme durch das Arbeitsfluid.

Die Wärmespeichermittel sind derart ausgebildet, dass sie unmittelbar von dem die Wärmezufuhr und die Wärmeentnahme besorgenden Arbeitsfluid durchströmt werden können.

Bei dem Arbeitsfluid kann es sich beispielsweise um unter Druck stehende Luft, etwa um die von einem Verdichter einer Kaverne oder von der Kaverne einer Turbine zuzuführende Druckluft eines Druckluftspeicherkraftwerks, handeln.

Die Wärmespeichermittel umfassen eine Schüttung bzw. ein Haufwerk aus einander berührenden Schüttungs- bzw. Haufwerkelementen. Zwischen den einander berührenden Schüttungselementen weist die Schüttung miteinander kommunizierende, durchgehende Poren auf, welche von dem Arbeitsfluid durchströmt werden können.

Zumindest ein Teil der Schüttungselemente sind als Ausgleichselemente ausgeführt, welche Bewegungsmöglichkeiten zwischen den Schüttungselementen in der Schüttung schaffen und so beispielsweise eine gegenseitige Zerstörung der Schüttungselemente aufgrund von Volumenänderungen verursacht durch Temperaturänderungen der Wärmespeichermittel verhindern. Darüber hinaus verhindern die Ausgleichselemente, dass der statische Druck in der Schüttung und zwischen der Schüttung und den Wandungen eines die Schüttung beherbergenden Behältnisses höher steigen kann, als der hydrostatische Druck in einer in ihrer Dichte der mittleren Dichte der Schüttung entsprechenden Flüssigkeit in einer Tiefe, die der Gesamthöhe der Schüttung entspricht.

Die Ausgleichselemente verhindern somit einerseits eine gegenseitige Zerstörung und andererseits eine Zerstörung der Wandungen eines die Schüttung aufnehmenden Behältnisses. Dies ist insbesondere bei eine Schüttung umfassenden Wärmespeichermitteln von Belang, da die Wandungen eines diese beherbergenden Behältnisses zur Verhinderung von Wärmeverlusten eine Wärmeisolierung und/oder eine Wärmedämmung umfassen, welche einem ansonsten bei Wärmeausdehnung entstehenden, den zuvor beschriebenen hydrostatischen Druck übersteigenden statischen Druck nicht standhalten können, wodurch sie zerstört würden.

Beispielsweise können die Ausgleichselemente eine derart reibungsoptimierte Oberfläche aufweisen, dass bei Volumenänderungen der Schüttungselemente aufgrund von Temperaturänderungen die Schüttungselemente untereinander in der Lage sind, gegen den statischen Druck in der Schüttung Ausweichbewegungen relativ zueinander auszuführen.

Die reibungsoptimierte Oberfläche besteht vornehmlich aus einem zumindest im Temperatureinsatzbereich der Wärmespeichermittel temperaturbeständigen Werkstoff oder Werkstoffgemisch, welcher bzw. welches Reibungskräfte zwischen einander berührender Kontaktflächen benachbarter Schüttungselemente gering hält, so dass eine beim Abkühlen gesetzte Schüttung sich beim Wiederaufheizen und Ausdehnen entspannen kann, ohne dass die Schüttungselemente untereinander verkeilen. Hierdurch wird eine gegenseitige Zerstörung der Schüttungselemente verhindert, wodurch einer mit einer Zerstörung der Schüttungselemente einher gehenden Verdichtung einer hiernach mit Schutt zugesetzten Schüttung bis hin zu einer porenfreien Masse, die nicht mehr von einem Arbeitsfluid durchströmt werden kann, vorgebeugt wird.

Demnach weisen zumindest ein Teil der Schüttungselemente eine derart reibungsoptimierte Oberfläche auf, dass Reibungskräfte zwischen einander berührender Kontaktflächen benachbarter Schüttungselemente klein genug bleiben, um ein Entspannen der Schüttung bei Volumenänderungen aufgrund von Temperaturschwankungen bzw. -änderungen frei von einem Verkeilen der Schüttungselemente untereinander zuzulassen.

Eine Verhinderung einer gegenseitigen Zerstörung der Schüttungselemente kann alternativ oder zusätzlich mit zumindest im Temperatureinsatzbereich der Wärmespeichermittel elastisch ausgeführten Ausgleichselementen erreicht werden. Die elastischen Ausgleichselemente sind in der Lage, Volumenänderungen der Schüttung aufgrund Temperaturschwankungen bzw. -änderungen durch eigene elastische Deformation zu unterbinden.

Demnach können zumindest ein Teil der Schüttungselemente als Ausgleichselemente ausgeführt sein, welche alternativ oder zusätzlich zu einer Ausführung mit reibungsoptimierter Oberfläche zumindest im Temperatureinsatzbereich der Wärmespeichermittel derart elastisch sind, dass die innerhalb einer Ebene der Schüttung liegenden Ausgleichselemente in der Lage sind, durch Temperaturänderungen verursachte Volumenänderungen bzw. Änderungen der Ausdehnungen der verbleibenden Schüttungselemente innerhalb der Ebene durch eigene elastische Deformation zu kompensieren.

Eine Verhinderung einer gegenseitigen Zerstörung der Schüttungselemente kann alternativ oder zusätzlich mit zumindest im Temperatureinsatzbereich der Wärmespeichermittel plastisch deformierbar ausgeführten Ausgleichselementen erreicht werden. Die plastisch deformierbaren Ausgleichselemente sind in der Lage, Volumenänderungen der Schüttung aufgrund Temperaturschwankungen bzw. - änderungen durch eigene plastische Deformation zu unterbinden.

Die Ebene der Schüttung, innerhalb der die elastischen Ausgleichselemente der Wärmespeichermittel in der Lage sind, durch Temperaturänderungen verursachte Volumenänderungen bzw. Änderungen der Ausdehnungen der verbleibenden Schüttungselemente innerhalb der Ebene durch eigene elastische und/oder plastische Deformation zu kompensieren, kann beispielsweise eine vorzugsweise horizontal verlaufende Querschnittsebene der Schüttung zwischen zwei beispielsweise einen Wärmespeicherraum eines Wärmespeichers begrenzenden, gegenüberliegenden, festen Wandungen einschließen.

Dadurch sind zumindest ein Teil der Schüttungselemente zumindest im Temperatureinsatzbereich der Wärmespeichermittel dermaßen elastisch, dass sie Volumenänderungen der Schüttung aufgrund Temperaturschwankungen bzw. - änderungen durch eigene elastische Deformation unterbinden.

Zumindest ein Teil der Schüttungselemente, vornehmlich wenigstens ein Teil der verbleibenden Schüttungselemente sind bevorzugt als Wärmespeicherelemente aus einem Material mit möglichst hoher Wärmekapazität ausgeführt. Die Schüttung besteht demnach vorzugsweise aus einer Mischung von als Wärmespeicherelemente aus einem Material vornehmlich hoher spezifischer Wärmekapazität ausgeführter Schüttungselemente mit als mit einer reibungsoptimierten Oberfläche und/oder elastisch ausgeführte Ausgleichselemente ausgeführter Schüttungselemente.

Beispielsweise bestehen die Ausgleichselemente zumindest an ihrer Oberfläche aus einem temperaturbeständigen und auftretende Reibungskräfte zwischen benachbarten Schüttungselementen möglichst gering haltenden Werkstoff, beispielsweise Graphit. Hierdurch werden Reibungskräfte zwischen benachbarten Schüttungselementen zumindest während Relativbewegungen benachbarter Schüttungselemente zueinander verringert, wie sie beispielsweise durch Volumenänderungen der Schüttung aufgrund von veränderlichen Wärmeausdehnungen der Schüttungselemente verursacht durch Temperaturschwankungen hervorgerufen werden. Dadurch kann sich die Schüttung selbst wieder entspannen, ohne dass es zu einer Zerstörung der Schüttungselemente kommt. Darüber hinaus ist Graphit im Temperatureinsatzbereich der Wärmespeichermittel plastisch verformbar und erfüllt damit auch die Voraussetzungen für eine weitere Ausgestaltungsmöglichkeit der Ausgleichselemente.

Die reibungsoptimierte Oberfläche kann als eine einen Kern eines Ausgleichselements umhüllende Beschichtung hergestellt sein.

Im Kern können die Ausgleichselemente aus dem selben Werkstoff wie die verbleibenden Schüttungselemente ausgeführt sein, beispielsweise aus dem selben Werkstoff, wie gegebenenfalls vorgesehene Wärmespeicherelemente.

Alternativ können die Ausgleichselemente vollständig aus einem temperaturbeständigen und auftretende Reibungskräfte zwischen benachbarten Schüttungselementen möglichst gering haltenden Werkstoff, beispielsweise Graphit hergestellt sein.

Die Ausgleichselemente können zumindest einen Kern oder eine einen Kern umgebende Umhüllung aus einem vornehmlich elastischen und/oder plastisch deformierbaren Werkstoff umfassen. Beispielsweise kann der Kern der Ausgleichselemente aus einem elastischen Werkstoff hergestellt sein, wohingegen eine den Kern umgebende Umhüllung, beispielsweise eine Beschichtung, bevorzugt aus einem temperaturbeständigen und auftretende Reibungskräfte zwischen benachbarten Schüttungselementen möglichst gering haltenden und/oder plastisch deformierbaren Werkstoff, beispielsweise Graphit, hergestellt sein kann. Alternativ kann der Kern eines Ausgleichselements von einer aus einem elastischen Werkstoff bestehenden Umhüllung umgeben sein, welche wiederum selbst mit einer reibungsoptimierten Oberfläche versehen sein kann, beispielsweise mit einer Beschichtung aus einem temperaturbeständigen und auftretende Reibungskräfte zwischen benachbarten Schüttungselementen möglichst gering haltenden und/oder plastisch deformierbaren Werkstoff, beispielsweise Graphit, hergestellt sein kann.

Wenigstens ein Teil der Schüttungselemente bestehen zumindest teilweise aus einem Keramikmaterial.

Wenigstens ein Teil der Schüttungselemente bestehen zumindest teilweise aus Eisen und/oder Stahl.

Wenigstens ein Teil der Schüttungselemente können zumindest zum Teil gebrochenes Naturmaterial umfassen.

Wenigstens ein Teil der Schüttungselemente können kugelförmig sein. Eine Kogelform stellt sowohl eine gute Grundlage für eine reibungsoptimierte Oberfläche, als auch für ein stabiles, elastisches Ausgleichselement dar.

Der dem Verhältnis des Volumens aller Schüttungselemente der Schüttung zum von der Schüttung eingenommenen Volumen entsprechende Raumfüllungsgrad der Schüttung ist bevorzugt kleiner gleich

$$\pi / 3\sqrt{2} \approx 0,74048 \approx 74\% \cdot$$

Vorzugsweise weist die Schüttung eine dem Verhältnis des Volumens der die Zwickel der Schüttung bildenden, miteinander kommunizierenden, durchgehenden Poren zum von der Schüttung eingenommenen Volumen entsprechende Porosität von bis zu 45% auf, besonders bevorzugt von 38% bis 42%.

Dabei gilt vorzugsweise, dass die Summe des Raumfüllungsgrads und der Porosität gleich 1 ist.

Ein zweiter Gegenstand der Erfindung betrifft einen Wärmespeicher mit einem Wärmespeicherraum. Zur Zufuhr und zur Entnahme von Wärme kann der Wärmespeicherraum von einem Arbeitsfluid durchströmt werden.

Der Wärmespeicherraum beherbergt durch eine zuvor beschriebene Schüttung gebildete Wärmespeichermittel. Indem zumindest ein Teil der Schüttungselemente als Ausgleichselemente ausgeführt sind, welche Bewegungsmöglichkeiten der Schüttungselemente in der Schüttung schaffen, wird einerseits eine gegenseitige Zerstörung der Schüttungselemente und andererseits eine Zerstörung zumindest eines Teils der Wandungen des Wärmespeicherraums aufgrund von Volumenänderungen verursacht durch Temperaturänderungen der Wärmespeichermittel verhindert.

Die Wärmespeichermittel sind vorzugsweise derart ausgebildet, dass sie zumindest zeitweilig von dem die Wärmezufuhr zum Wärmespeicher und die Wärmentnahme aus dem Wärmespeicher besorgenden Arbeitsfluid unmittelbar durchströmt sind. Bei dem Arbeitsfluid kann es sich beispielsweise um die unter Druck stehende Luft eines Druckluftspeicherkraftwerks handeln.

Der Wärmespeicher kann als Energiespeicher für ein solarthermisches Kraftwerk und/oder für ein adiabatisches Druckluftspeicherkraftwerk vorgesehen sein.

Der Wärmespeicherraum kann durch einen von einem Betonmantel umgebenen Behälterinnenraum gebildet sein.

Der Betonmantel kann als ein Druckbehälter ausgeführt sein bzw. von einem solchen umfasst sein, wodurch der Wärmespeicher einen Druckbehälter umfasst. Hierdurch ist der Wärmespeicher zur Verwendung in Verbindung mit einem unter Druck stehenden Arbeitsfluid geeignet. Beispielsweise kann der Wärmespeicher so zur Verwendung in einem Druckluftspeicherkraftwerk vorgesehen sein, wobei die unter Druck stehende Luft das Arbeitsfluid bilden kann.

Vorteile gegenüber dem Stand der Technik ergeben sich unter anderem dadurch, dass durch die Verwendung einer Schüttung, deren Schüttungselemente zumindest zum Teil als Ausgleichselemente ausgeführt sind, sehr kostengünstig herzustellende und beispielsweise einfach in einen Wärmespeicherraum einbringbare Wärmespeichermittel zur Verfügung gestellt werden können, die dauerhaft von einem Arbeitsfluid durchströmt werden können. Um zu erreichen, dass die Wärmespeichermittel dauerhaft von einem Arbeitsfluid durchströmt werden können, sind die Ausgleichelemente vorgesehen, welche sicherstellen, dass eine gegenseitige Zerstörung der Schüttungselemente verursacht durch Volumenänderungen aufgrund von Temperaturänderungen der Wärmespeichermittel verhindert wird.

Weitere Vorteile gegenüber dem Stand der Technik ergeben sich dadurch, dass die Wärmespeichermittel aus bautechnisch zugelassenen Mitteln besonders kostengünstig hergestellt werden können.

Bei diesen bautechnisch zugelassenen Mitteln handelt es sich beispielsweise um gebrochenes Naturmaterial und/oder beispielsweise Keramikkugeln zumindest als Wärmespeicherelemente, versetzt mit Ausgleichselementen. Auch die Ausgleichselemente können aus gebrochenem Naturmaterial mit einer beispielsweise durch Beschichtung mit einem zumindest im Temperatureinsatzbereich der Wärmespeichermittel temperaturbeständigen Werkstoff oder Werkstoffgemisch, welcher bzw. welches Reibungskräfte zwischen einander berührender Kontaktflächen benachbarter Schüttungselemente gering hält, hergestellten reibungsoptimierten Oberfläche bestehen. Alternativ können einfach und in Massen herstellbare Kugeln als Schüttungselemente verwendet werden, welche beispielsweise zum Teil mit einer reibungsoptimierten Oberfläche versehen als Ausgleichselemente ausgeführt sein können, und/oder beispielsweise mit Graphit- und/oder Stahlkugeln als Ausgleichselemente vermischt sein können.

Eine kostengünstige Herstellbarkeit des Wärmespeichers ergibt sich insbesondere dadurch, dass als Schüttung ausgeführte Wärmespeichermittel einfach in einen Wärmespeicherraum eingebracht werden können, ohne dass beispielsweise bei der Verwendung von Formsteinen auf eine bestimmte Anordnung der einzelnen Schüttungselemente geachtet werden muss.

Zusätzliche Vorteile ergeben sich außerdem dadurch, dass in der durchgehende Poren aufweisenden Schüttung keine vorgefertigte Strömungskanäle vorgesehen werden müssen, was die Herstellung herkömmlicher Wärmespeichermittel, wie etwa solcher aus Formsteinen, bislang erheblich verteuert.

Indem die Ausgleichselemente einerseits eine gegenseitige Zerstörung und andererseits eine Zerstörung der zumindest teilweise eine Wärmeisolierung und/oder eine Wärmedämmung umfassenden Wandungen eines die Schüttung aufnehmenden Behältnisses verhindern, ermöglicht die Erfindung darüber hinaus eine im Vergleich zum Stand der Technik wesentlich verbesserte Bauraumnutzung. Weil dank der die genannten Effekte verhindernden Ausgleichselemente die Schüttung bis an die Wandungen reichen kann.

Kurzbeschreibung der Zeichnungen

Die Erfindung wird nachfolgend anhand von in den Zeichnungen dargestellten Ausführungsbeispielen näher erläutert. Darin bezeichnen gleiche Bezugszeichen gleiche oder gleich wirkende Elemente. Der Übersicht halber können nur Bezugszeichen in den einzelnen Zeichnungen dargestellt sein, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:

Fig. 1    ein erstes Ausführungsbeispiel eines Wärmespeichermittel beherbergenden Wärmespeichers in einer Draufsicht.

Fig. 2    einen Schnitt entlang der Linie A-A durch den Wärmespeichermittel beherbergenden Wärmespeicher aus Fig. 1.

Fig. 3    einen Schnitt entlang der Linie B-B durch den Wärmespeichermittel beherbergenden Wärmespeicher aus Fig. 2.

Fig. 4    ein zweites Ausführungsbeispiel eines Wärmespeichermittel beherbergenden Wärmespeichers in einem Längsschnitt.

Fig. 5    einen Schnitt entlang der Linie B-B durch den Wärmespeichermittel beherbergenden Wärmespeicher aus Fig. 4.

Fig. 6    je einen Ausschnitt eines Schnitts durch je ein Ausführungsbeispiel einer Schüttung umfassender Wärmespeichermittel, wobei Fig. 6 a) einen Ausschnitt einer innerhalb des Schnitts B-B in Fig. 2 liegenden Ebene und Fig. 6 b) einen Ausschnitt einer innerhalb des Schnitts B-B in Fig. 4 liegenden Ebene zeigen.

Fig.7    einen Schnitt durch einen Wärmespeichermittel beherbergenden Wärmespeicher gemäß einem weiteren Ausführungsbeispiel.

Ausführliche Beschreibung der bevorzugten Ausführungsbeispiele

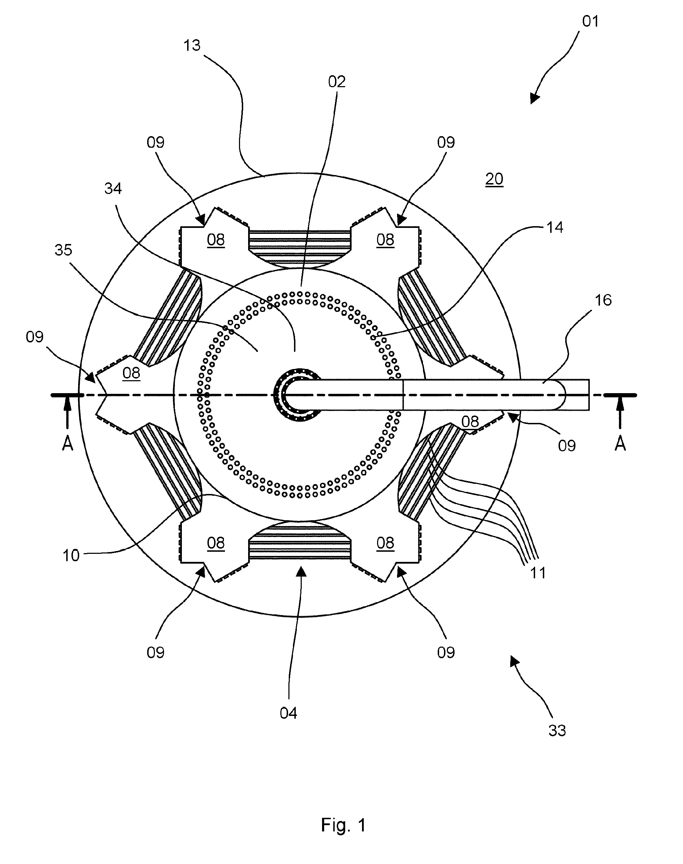

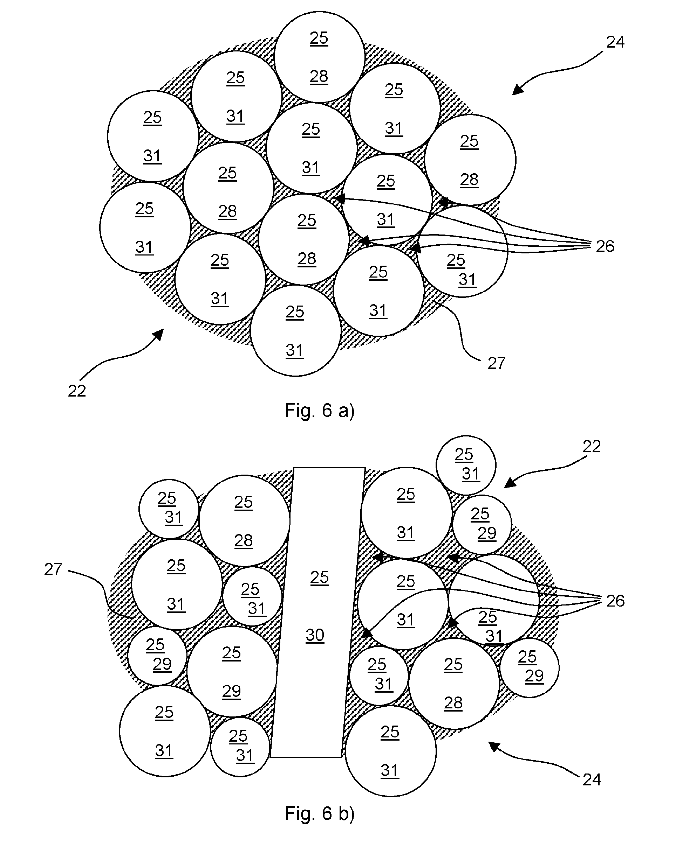

Ein in den Fig. 1 bis Fig. 7 ganz oder in Teilen bzw. verschiedenen Ansichten dargestellter Wärmespeicher 33 besteht im Wesentlichen aus mindestens einem Wärmespeichermittel 22 beherbergenden und zum Austausch von Wärme mit den Wärmespeichermitteln 22 zumindest zeitweilig von einem Arbeitsfluid 27 (Fig. 6 a) und Fig. 6 b)) durchströmten Wärmespeicherraum 23.

Der Wärmespeicherraum 23 ist bevorzugt durch einen von einem Betonmantel 07 umschlossenen Behälterinnenraum 05 gebildet.

Die zum Austausch von Wärme mit einem Arbeitsfluid 27 sowie zur wenigstens zeitweiligen Speicherung der Wärme von deren Zufuhr bis zu deren Entnahme durch das Arbeitsfluid 27 vorgesehenen Wärmespeichermittel 22 umfassen eine in den Fig. 6 a) und Fig. 6 b) dargestellte Schüttung 24 aus einander berührenden Schüttungselementen 25. Zwischen den Schüttungselementen 25 weist die Schüttung 24 miteinander kommunizierende, durchgehende Poren 26 auf. Die Poren 26 werden von dem Arbeitsfluid 27 zumindest zeitweilig durchströmt. Zumindest ein Teil der Schüttungselemente 25 sind als Ausgleichselemente 28, 29, 30 ausgeführt. Die Ausgleichselemente schaffen gegenseitige Bewegungsmöglichkeiten der Schüttungselemente 25 in der Schüttung 24. Die Ausgleichselemente 28, 29, 30 verhindern eine gegenseitige Zerstörung der Schüttungselemente 25 aufgrund von Volumenänderungen, welche durch Temperaturänderungen der Wärmespeichermittel 22 verursacht werden.

Die Schüttungselemente 25 können wie in Fig. 6 a) dargestellt gleiche und/oder wie in Fig. 6 b) dargestellt unterschiedliche Abmessungen sowie wahlweise wie in Fig. 6 a) dargestellt gleiche und/oder wie in Fig. 6 b) dargestellt unterschiedliche Geometrien aufweisen. Dies kann sowohl wie in Fig. 6 b) dargestellt für die Ausgleichselemente 28, 29, 30, als auch für die verbleibenden Schüttungselemente 31 gelten.

Um eine gegenseitige Zerstörung der Schüttungselemente 25 und/oder eine Zerstörung der zumindest teilweise eine Wärmeisolierung und/oder eine Wärmedämmung umfassenden Wandungen des die Schüttung beherbergenden Wärmespeicherraums 23 aufgrund von Volumenänderungen, welche durch Temperaturänderungen der Wärmespeichermittel 22 verursacht werden, zu verhindern, kann zumindest ein Teil der Ausgleichselemente 28, 30 eine reibungsoptimierte Oberfläche aufweisen, welche es den Schüttungselementen 25 untereinander erlaubt, gegen den statischen Druck in der Schüttung 24 Ausweichbewegungen relativ zueinander auszuführen.

Die Ausgleichselemente 28, 29, 30 erlauben so ein Entspannen der in ihrer Ausdehnung z.B. zur Seite und nach unten durch die Wandungen des Wärmespeicherraums 23 begrenzten Schüttung 24.

Hierzu kann zumindest ein Teil der Ausgleichselemente 28, 29, 30, beispielsweise die Ausgleichselemente 28 und 30 zumindest an ihrer Oberfläche aus einem temperaturbeständigen und auftretende Reibungskräfte zwischen einander berührender Kontaktflächen benachbarter Schüttungselemente 25 derart gering haltenden Werkstoff oder Werkstoffgemisch bestehen, dass sich eine beim Abkühlen beispielsweise innerhalb eines Wärmespeicherraums 23 gesetzte Schüttung beim Wiederaufheizen und Ausdehnen entspannen kann, ohne dass die Schüttungselemente 25 untereinander verkeilen.

Beispielsweise kann die reibungsoptimierte Oberfläche als eine einen Kern eines Ausgleichselements 28 umhüllende Beschichtung hergestellt sein, beispielsweise in Form einer Beschichtung aus Graphit.

Um eine gegenseitige Zerstörung der Schüttungselemente 25 und/oder eine Zerstörung der zumindest teilweise eine Wärmeisolierung und/oder eine Wärmedämmung umfassenden Wandungen des die Schüttung beherbergenden Wärmespeicherraums 23 aufgrund von Volumenänderungen, welche durch Temperaturänderungen der Wärmespeichermittel 22 verursacht werden, zu verhindern, können alternativ oder zusätzlich zumindest ein Teil der Ausgleichselemente 28, 29, 30, beispielsweise die Ausgleichselemente 29 und 30 zumindest im Temperatureinsatzbereich der Wärmespeichermittel derart elastisch und/oder plastisch deformierbar sein, dass die innerhalb einer in den Fig. 6 a) und Fig. 6 b) dargestellten Ebene 32 der Schüttung 24 liegenden Ausgleichselemente 29, 30 durch Temperaturänderungen verursachte Volumenänderungen der verbleibenden Schüttungselemente 31 sowie gegebenenfalls vorhandener, nicht elastisch ausgeführter Ausgleichselemente 28 innerhalb der Ebene 32 durch eigene elastische Deformation zu kompensieren in der Lage sind.

Beispielsweise können die elastisch ausgeführten Ausgleichselemente 29 zumindest einen Kern oder eine einen Kern umgebende Umhüllung aus einem vornehmlich elastischen Werkstoff aufweisen. Beispielsweise die Ausgleichselemente 30 können als elastisch deformierbare Rohre bzw. an ihren Enden vorzugsweise offene Hohlzylinder mit einer beispielsweise gerade, gekrümmt oder schlangenlinienartig verlaufenden Hohlzylinderachse ausgeführt sein. Diese können an ihrer Mantelfläche mit einer Beschichtung versehen sein, welche eine reibungsoptimierte Oberfläche sicherstellt. Eine solche Beschichtung kann beispielsweise Graphit umfassen. Die Rohre bzw. Holzylinder können ebenfalls zumindest zeitweilig während des Wärmeaustauschs von dem Arbeitsfluid 27 durchströmt sein. Beispielsweise können die Rohre bzw. Holzylinder sich hierbei mit Ihren Hohlzylinderachsen vorzugsweise längs einer Zylinderachse 06 des Wärmespeicherraums 23 erstrecken.

Das für die elastisch deformierbaren Ausgleichselemente 29, 30 erläuterte gilt grundsätzlich auch für alternativ oder zusätzlich vorgesehene, plastisch deformierbare Ausgleichelemente.

Wichtig ist hervorzuheben, dass die Ausführungen zu den Ausgleichselementen 28, 29 und 30 lediglich dazu dienen sollen, eine grundsätzlich mögliche verschiedenartige Ausgestaltung derselben darzustellen. Die Ausführungen sollen keine Beschränkungen der jeweils dargestellten Ausführungsbeispiele darstellen. Demnach können die in den Fig. 6 a) und Fig. 6 b) dargestellten Ausgleichselemente 28, 29, 30 sämtlich elastisch und/oder plastisch und/oder mit einer reibungsoptimierten Oberfläche ausgeführt sein.

Wenigstens ein Teil der Schüttungselemente 25 können zumindest teilweise aus einem Keramikmaterial bestehen, ebenso wie wenigstens ein Teil der Schüttungselemente 25 zumindest teilweise aus Eisen und/oder Stahl bestehen können. Ebenfalls ist denkbar, dass wenigstens ein Teil der Schüttungselemente 25, bevorzugt zumindest ein Teil der verbleibenden Schüttungselemente 31 zumindest zum Teil gebrochenes Naturmaterial umfassen können.

Die Schüttungselemente 25 können wie in Fig. 6 a) dargestellt sämtlich, oder wie in Fig. 6 b) dargestellt zum Teil kugelförmig sein.

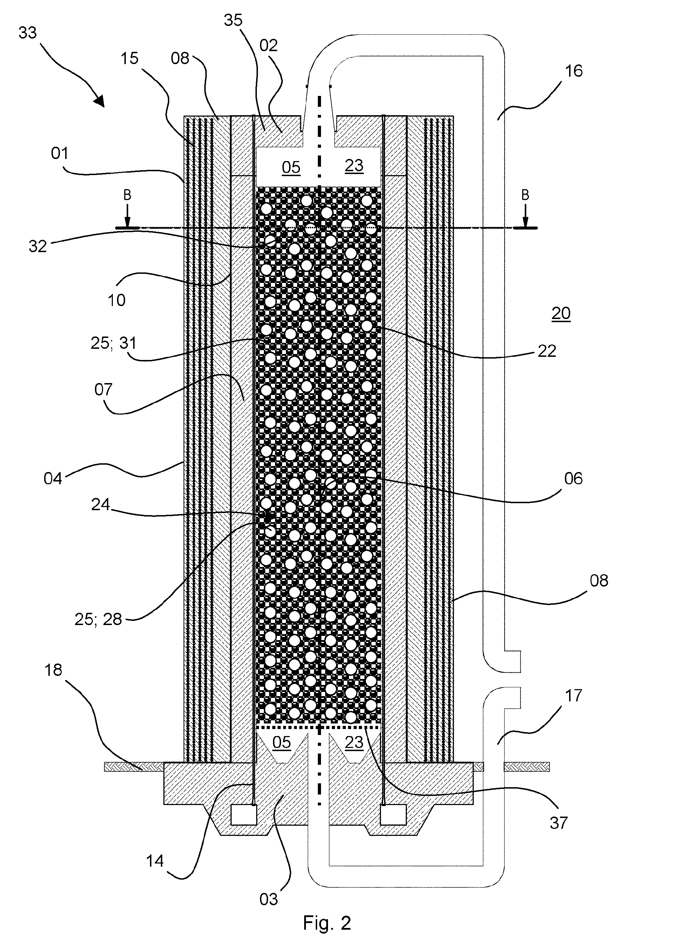

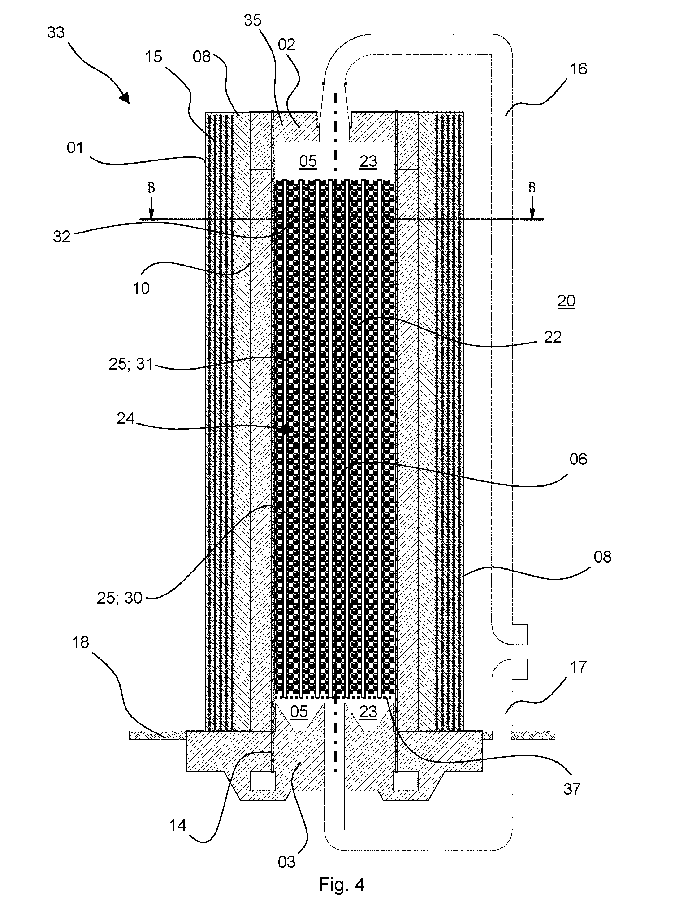

Die Wärmespeichermittel 22 können wie in Fig. 2 und Fig. 4 dargestellt auf einem im Wärmespeicherraum 23 angeordneten, diesen beispielsweise horizontal teilenden und für das Arbeitsfluid 27 durchlässigen Zwischenboden 36 ruhen. Der darunter liegende Teil des Wärmespeicherraums kann so eine Beruhigungskammer für das durch die Wärmespeichermittel 22 strömende Arbeitsfluid 27 bilden. Hierdurch können Strömungsverluste verringert werden.

Der Wärmespeicher 33 kann einen Druckbehälter 01 mit einem von einem Betonmantel 07 umschlossenen Behälterinnenraum 05 als die Wärmespeichermittel 22 beherbergenden Wärmespeicherraum 23 umfassen.

Der Betonmantel 07 umfasst wenigstens eine zwischen einem Behälterkopf 02 und einem Behälterfuß 03 vorgesehene hohlzylinderförmige Behälterpartie 04. Der Behälterinnenraum 05 ist vom Behälterkopf 02, dem Behälterfuß 03 und der wenigstens einen hohlzylinderförmigen Behälterpartie 04 umschlossen. Der Betonmantel 07 kann darüber hinaus zusätzlich zu der hohlzylinderförmigen Behälterpartie 04 zumindest Teile des Behälterkopfs 02 und/oder Behälterfußes 03 umfassen.

Die hohlzylinderförmige Behälterpartie 04 kann eine gerade, gekrümmt oder entlang einer beliebigen Linie verlaufende Zylinderachse 06 aufweisen, welche sich entlang der Achse des Druckbehälters 01 vom Behälterkopf 02 bis zum Behälterfuß 03 erstreckt. Die hohlzylinderförmige Behälterpartie 04 kann aneinander angrenzend gleiche oder unterschiedliche Außen und/oder Innenquerschnitte aufweisen, wobei die Mittelpunkte aufeinander folgender Querschnitte vorzugsweise entlang der Zylinderachse 06 verlaufen. Der Behälterkopf 02 kann beispielsweise einen Behälterdeckel und der Behälterfuß 03 einen Behälterboden bilden. Es ist sowohl eine stehende, als auch eine liegende Anordnung des Druckbehälters 01 denkbar. Bei einer stehenden Anordnung dient der Behälterfuß 03 wie in Fig. 2 und Fig. 4 dargestellt bevorzugt einer Aufstellung des Druckbehälters 01 beispielsweise auf dem Erdboden 18 bzw. einer zumindest zum Teil beispielsweise in den Erdboden 18 eingelassenen Aufstellung des Druckbehälters 01.

Um unter Anderem Belastungen durch die aus dem beispielsweise unter Druck stehenden Arbeitsfluid 27 resultierenden Kräfte zu widerstehen, kann der Betonmantel 07 wenigstens teilweise in mindestens einer Richtung schlaff bewehrt sein. Hierzu können Bewehrungen 15 vorgesehen sein, welche in Umfangsrichtung und/oder in Richtung entlang der Zylinderachse 06 und/oder in einer anderen Richtung, beispielsweise spiralförmig um die Zylinderachse 06 herum im Betonmantel 07 verlaufen können.

Alternativ oder zusätzlich kann der Betonmantel 07 wenigstens teilweise in mindestens einer Richtung vorgespannt sein. Hierzu können getrennte Spannglieder 11 in Umfangsrichtung und/oder Spannglieder 14 in Richtung entlang der Zylinderachse 06 vorgesehen sein.

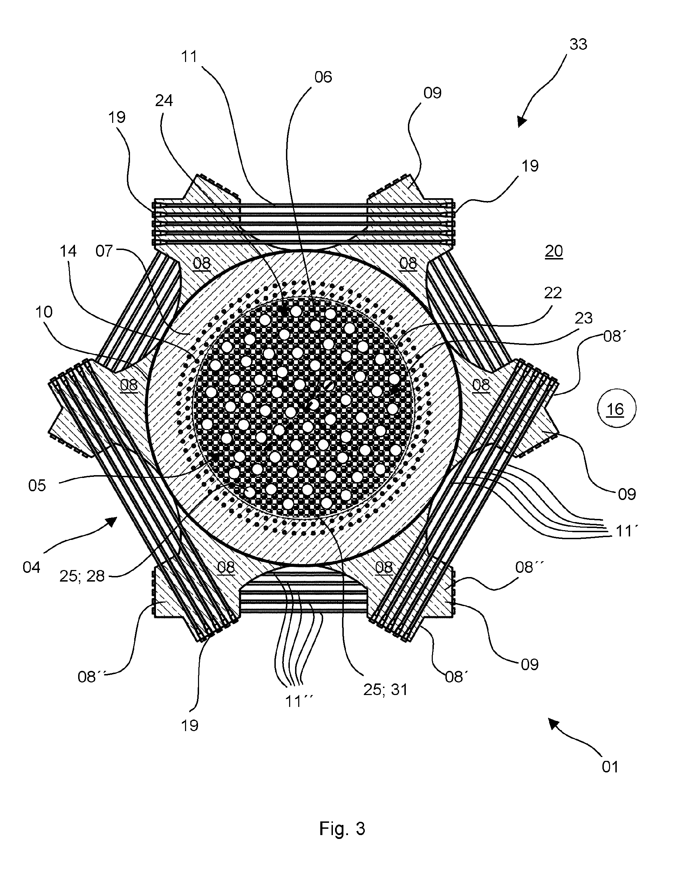

Dabei können wie bei der in den Fig. 3 dargestellten Ausgestaltung in Umfangsrichtung wirkende linear verlaufende bzw. lineare Spannglieder 11 vorgesehen sein. Da diese nicht gekrümmt verlaufen, sondern linear verlaufend ausgebildet sind, weisen diese keine Reibungsverluste durch eine auch nur teilweise Umschlingung auf, wodurch es auch zu keinen Verschleißerscheinungen beispielsweise durch eine thermische und/oder mechanische Wechselbeanspruchung des als Wärmespeicher 33 mit veränderlicher Temperatur und dadurch veränderlicher Wärmeausdehnung ausgeführten Druckbehälters 01 kommt. Darüber hinaus ist durch außen liegende lineare Spannglieder 11 ein gleichmäßiger Verlauf der Vorspannung sichergestellt.

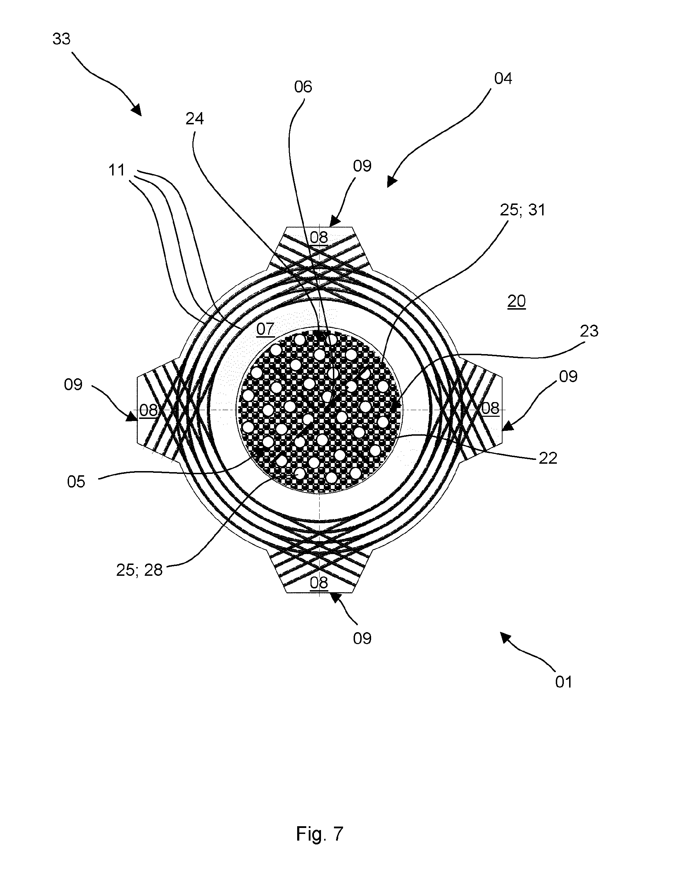

Alternativ können die in Umfangsrichtung wirkenden Spannglieder wie in Fig. 7 dargestellt die Zylinderachse 06 zumindest teilweise umschlingen, wobei die Spannglieder 11 zumindest abschnittsweise gekrümmt verlaufen. Eine derart nur teilweise Umschlingung stellt einen vertretbaren Kompromiss zwischen Wirtschaftlichkeit im Hinblick auf die Anzahl der Spannglieder 11 und Verschleiß durch Reibungsverluste dar.

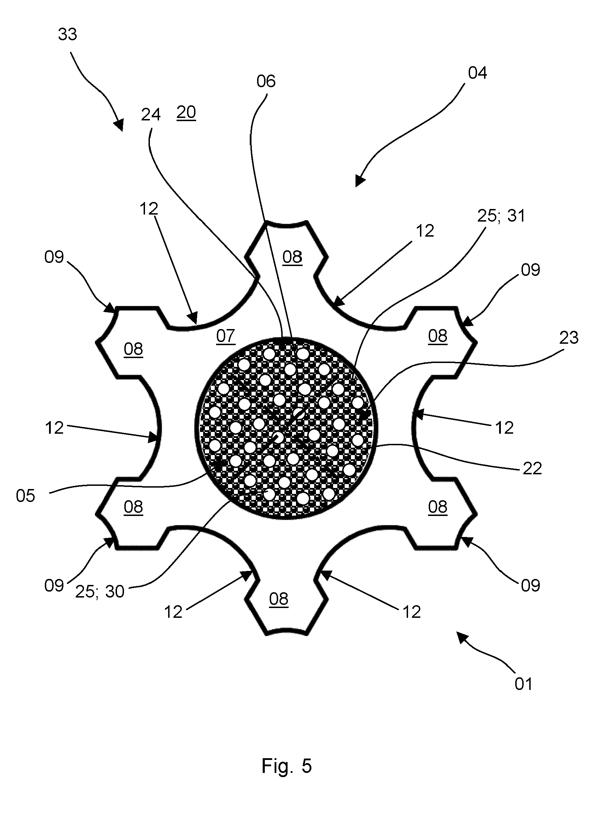

Wichtig ist an dieser Stelle hervorzuheben, dass der Übersichtlichkeit halber und um andere, nachfolgend noch beschriebene Elemente besser erkennbar darzustellen, in Fig. 5 auf die Darstellung von Spanngliedern verzichtet wurde, was keinesfalls bedeuten soll, dass bei der in Fig. 5 dargestellten Ausführungsform keine derartigen Spannglieder vorgesehen sein können.

Zur Verwirklichung einer Vorspannung in Umfangrichtung mittels linearer Spannglieder 11 können diese wie in den Fig. 1 bis Fig. 4 dargestellt außerhalb des Betonmantels 07 angeordnet sein. Hierzu können zumindest auf dem als hohlzylinderförmige Behälterpartie 04 ausgebildeten Teil des Betonmantels 07 von der Zylinderachse 06 aus gesehen auf der dem Behälterinnenraum 05 abgewandten Außenseite des Betonmantels radial nach außen aufstehende Fortsätze 08 vorgesehen sein, zwischen denen die linearen Spannglieder 11 gespannt sind.

Die auf der hohlzylinderförmigen Behälterpartie 04 des Betonmantels 07 radial von der Zylinderachse 06 weg nach außen aufstehende Fortsätze 08 sind hierbei in einem in den Fig. 3 und Fig. 5 dargestellten, normal zur Zylinderachse 06 verlaufenden Querschnitt und in der in Fig. 1 dargestellten Draufsicht vorzugsweise gleichmäßig über den Umfang des Betonmantels 07 verteilt angeordnet. In den in den Fig. 3 und Fig. 5 dargestellten Querschnitten erstrecken sich die Fortsätze 08 vorzugsweise ununterbrochen vom Behälterfuß 03 zum Behälterkopf 02.

Die Fortsätze 08 sind zumindest derart weit aufstehend ausgebildet, dass zumindest vom freien Ende 09 jeden Fortsatzes 08 aus zumindest die freien Enden 09 der beiden in Umfangsrichtung unmittelbar benachbarten Fortsätze 08 in gerader Linie über die konvexe Wölbung der Mantelfläche 10 des Betonmantels 07 hinweg sichtbar sind. Hieraus ergibt sich die Notwendigkeit, dass wenigstens drei auf dem Betonmantel 07 radial nach Außen von der Zylinderachse 06 weg aufstehende Fortsätze 08 vorgesehen sind.

Zwischen in Umfangsrichtung benachbarten Fortsätzen 08 sind die linearen Spannglieder 11 angeordnet. Die linearen Spannglieder 11 halten wenigstens die hohlzylinderförmige Behälterpartie 04 des Betonmantels 07 unter einer in Umfangsrichtung und gegen einen Überdruck im Behälterinnenraum 05 wirkende radial von außen zur Zylinderachse 06 hin gerichteten Vorspannung.

Vorzugsweise ist eine gerade Anzahl n von gleichmäßig verteilt um den Umfang des Betonmantels 07 angeordneten Fortsätzen 08 vorgesehen. Besonders bevorzugt sind wie in den Fig. 1 bis 5 dargestellt insgesamt sechs gleichmäßig über den Umfang verteilt auf dem Betonmantel 07 von der Zylinderachse 06 weg radial nach außen aufstehende Fortsätze 08 vorgesehen.

Hierdurch können wie in Fig. 3 ersichtlich in einer ersten normal zur Zylinderachse 06 verlaufenden Querschnittsebene lineare Spannglieder 11' zwischen ersten Paaren aus benachbarten Fortsätzen 08' gespannt sein, wohingegen in einer unmittelbar benachbarten, zweiten normal zur Zylinderachse 06 verlaufenden Querschnittsebene lineare Spannglieder 11" zwischen zweiten Paaren aus benachbarten Fortsätzen 08" gespannt sind. Die ersten Paare benachbarter Fortsätze 08', zwischen denen in der ersten Querschnittsebene die Spannglieder 11' gespannt sind, sind hierbei gegenüber den zweiten Paaren benachbarter Fortsätze 08", zwischen denen in der zweiten Querschnittsebene die Spannglieder 11" gespannt sind, um einen Winkel 360°/n um die Zylinderachse 06 verdreht, wobei n die Zahl der Fortsätze in einer Querschnittsebene ist.

Wichtig ist an dieser Stelle hervorzuheben, dass die Fortsätze 08 integrale Bestandteile wenigstens der hohlzylinderförmigen Behälterpartie 04 des Betonmantels 07 sein können, wobei die Fortsätze 08 hierbei in einem Herstellungsvorgang gemeinsam mit dem Betonmantel 07 und vorzugsweise mit diesem fest verbunden hergestellt werden können. Alternativ können die Fortsätze 08 stempelförmig auf dem Betonmantel 07 aufstehend ausgebildet sein. Darüber hinaus können sich die Fortsätze 08 in beiden Ausgestaltungsvarianten in einem Querschnitt normal zur Zylinderachse 06 betrachtet vom Betonmantel 07 aus gesehen zu ihren freien Enden 09 hin verjüngen. Alternativ oder zusätzlich können die Fortsätze 08 in beiden Ausgestaltungsvarianten auswuchsartig mit gleichmäßigen und knickfreien Übergängen in die äußere Gestalt zumindest der hohlzylinderförmigen Behälterpartie 04 integriert sein.

Zwischen den benachbarten Fortsätzen 08 können Druckbogen 12 vorgesehen sein (Fig. 5).

Die freien Enden 09 der Fortsätze 08 können Aufnahmesysteme 19 für die linearen Spannglieder 11 tragen. Die Aufnahmesysteme 19 können als Metallkonstruktionen beispielsweise aus Stahl ausgeführt sein. Die linearen Spannglieder 11 erstrecken sich vom einen am freien Ende 09 eines ersten Fortsatzes 08 angeordneten Aufnahmesystem 19 zum nächsten, am freien Ende 09 eines zweiten Fortsatzes 08 angeordneten Aufnahmesystem 19. Die linearen Spannglieder können hierbei in so genannten Speichen verankert sein.

Der von dem Wärmespeicher 33 umfasste Druckbehälter 01 kann wie in Fig. 1 angedeutet durch eine Ummantelung 13 umhüllt sein. Die Ummantelung 13 kann dem Schutz des Druckbehälters 01 gegen Umwelteinflüsse, insbesondere gegen Witterungseinflüsse und Wärmestrahlung dienen. Gleichzeitig kann die Ummantelung 13 den Druckbehälter 01, insbesondere bei einer in den Fig. 1 bis Fig. 5 dargestellten Ausführung mit außen liegenden linearen Spanngliedern 11 gegen unbefugte und/oder unberechtigte Manipulation schützen. Die Ummantelung 13 kann als luftdurchlässige Hülle ausgestaltet sein, damit es zu keinem Wärmestau unter ihr kommt.

Zumindest der Betonmantel 07 des Druckbehälters 01 kann wie in Fig. 2 und Fig. 4 dargestellt mittels Spanngliedern 14 in Richtung parallel zur Zylinderachse 06 vorgespannt sein. Die Spannglieder 14 können hierbei vom Behälterkopf 02 zum Behälterfuß 03 in eigens hierfür vorgesehenen Kanälen, Aussparungen, Rohren oder dergleichen zumindest in der hohlzylinderförmigen Behälterpartie 04 des Betonmantels 07 des Druckbehälters 01 verdeckt verlaufen.

Der Betonmantel 07 kann wie in Fig. 2 und Fig. 4 dargestellt mittels einer zumindest in Richtung parallel zur Zylinderachse 06 verlaufenden Bewehrung 15 schlaff bewehrt sein. Alternativ oder zusätzlich kann auch eine schlaffe Bewehrung in Umfangsrichtung vorgesehen sein. Mittels einer gegebenenfalls vorgesehenen, auch als Schlaffbewehrung bezeichneten schlaff ausgeführten Bewehrungen kann die Sicherheit des als Druckbehälter 01 ausgeführten Wärmespeichers 23 gesteuert werden.

Wichtig ist hierbei die Trennung der Vorspannung von der für eine zusätzliche Sicherheit eventuell eingebauten schlaffen Bewehrung 15 hervorzuheben. Die schlaffe Bewehrung 15 kann ohne Störung und Berücksichtigung der Vorspannung im inneren Betonmantel 07 verlegt werden, und die Vorspannung kann außen angebracht werden. Das vereinfacht die Planung und den Bau eines als Druckbehälter 01 ausgeführten Wärmespeichers 23 erheblich und verbessert das Tragverhalten durch weniger Fehlstellen und Hohlräume im Betonmantel 07.

Der Betonmantel 07 kann wie in den Fig. 3 und Fig. 5 dargestellt einen normal zur Zylinderachse 06 kreisrunden Innenquerschnitt aufweisen.

Der als Druckbehälter 01 ausgeführte Wärmespeicher 33 kann wie in den Fig. 2 und Fig. 4 dargestellt beispielsweise am Behälterkopf 02 mit einer ersten Zu- und/oder Abführungsleitung 16 für das Arbeitsfluid 27 versehen sein. Beispielsweise am Behälterfuß 03 kann der Druckbehälter 01 beispielsweise mit wenigstens einer zweiten Zu- und/oder Abführungsleitung 17 für das Arbeitsfluid 27 versehen sein.

Der einen Druckbehälter 01 mit im durch den Behälterinnenraum 05 gebildeten Wärmespeicherraum 23 beherbergten Wärmespeichermitteln 22 umfassende Wärmespeicher 33 kann Teil einer Einrichtung zur Energieerzeugung, beispielsweise Teil eines Solarkraftwerks, insbesondere eines solarthermischen Kraftwerks sein.

Besonders bevorzugt kann der Wärmespeicher 33 für ein Druckluftspeicherkraftwerk, besonders bevorzugt für ein adiabatisches Druckluftspeicherkraftwerk vorgesehen sein.

Die erste Zu- und/oder Abführungsleitung 16 steht in diesem Fall bevorzugt wahlweise mit einem Verdichter oder einer Turbine in Verbindung bzw. ist wahlweise mit einem Verdichter oder einer Turbine in Verbindung bringbar. Die zweite Zu- und/oder Abführungsleitung 17 steht hierbei bevorzugt mit einem beispielsweise unterhalb des Erdbodens 18 angeordneten Druckluftspeicher in Verbindung bzw. ist wahlweise mit einem Druckluftspeicher in Verbindung bringbar.

Beispielsweise der Behälterkopf 02 eines vom Wärmespeicher 33 umfassten Druckbehälters 01 kann abnehmbar sein, wodurch der Behälterinnenraum 05 für Montage und Wartung, sowie zum Einbringen der die Wärmespeichermittel 22 bildenden Schüttung 24 leicht zugänglich ist. Vorzugsweise befindet sich bei einem aufrecht stehenden Druckbehälter 01 mindestens der Behälterkopf 02 oberhalb des Erdbodens 18, der Rest kann im Erdboden 18 versenkt sein. Alternativ ist denkbar, lediglich eine beispielsweise mittels einer Stahlkappe 34 verschlossene Zugangsöffnung im Behälterkopf 02 vorzusehen.

Vorzugsweise trennt eine nicht näher dargestellte, durch mindestens eine ebenfalls nicht näher dargestellte hitzebeständige Schicht geschützte erste thermisch isolierende Schicht die Wärmespeichermittel 22 vom hitzeempfindlicheren Betonmantel 07. Zwischen der ersten thermisch isolierenden Schicht und Betonmantel 07 sowie gegebenenfalls dem Behälterkopf 02 und dem Behälterfuß 03 kann sich darüber hinaus noch eine zweite thermisch isolierende Schicht befinden, falls die erste thermisch isolierende Schicht nicht selbst in ausreichendem Maße thermisch isolierend wirkt. Die zweite thermisch isolierende Schicht kann beispielsweise aus Luft bestehen.

Der beispielsweise im oberen Bereich eines von einem Wärmespeicher 33 umfassten, stehend angeordneten Druckbehälters 01 vorgesehene Behälterkopf 02 kann als eine Betonkappe 35 ausgestaltet sein. Ebenso ist denkbar, dass eine Stahlkappe 34 in eine den Behälterkopf 02 bildenden Betonkappe 35 integriert ist.

Zumindest der Behälterkopf 02 und/oder der Behälterfuß 03 und/oder die hohlzylinderförmige Behälterpartie 04 des Betonmantels 07 des Druckspeichers 01 des Wärmespeichers 33 können gegen die Umgebung 20 durch wärmedämmendes Material thermisch isoliert sein. Die thermische Isolation kann zumindest zum Teil durch die gegebenenfalls vorgesehene Ummantelung 13 erfolgen.

Der Behälterfuß 03 kann in Form eines am Erdboden 18 oder zumindest zum Teil darin versenkt angeordneten Fundaments ausgestaltet sein, in den die darauf aufstehende und mittels des Behälterkopfs 02 an ihrer dem Erdboden 18 abgewandten Seite verschlossene hohlzylinderförmige Behälterpartie 04 des Betonmantels 07 eingegossen sein kann.

Die Erfindung ist insbesondere im Bereich der Herstellung von Wärmespeichern und Wärmespeichermitteln für Wärmespeicher, beispielsweise für Anlagen zur Energieerzeugung und/oder zur Energiespeicherung gewerblich anwendbar.

**Bezugszeichenliste**

| 01 | Druckbehälter |
|---|---|
| 02 | Behälterkopf |
| 03 | Behälterfuß |
| 04 | hohlzylinderförmige Behälterpartie |
| 05 | Behälterinnenraum |
| 06 | Zylinderachse |
| 07 | Betonmantel |
| 08; 08'; 08" | Fortsatz |
| 09 | freies Ende |
| 10 | Mantelfläche |
| 11; 11'; 11" | Spannglied |
| 12 | Druckbogen |
| 13 | Ummantelung |
| 14 | Spannglied |
| 15 | Bewehrung |
| 16 | erste Zu- und/oder Abführungsleitung |
| 17 | zweite Zu- und/oder Abführungsleitung |
| 18 | Erdboden |
| 19 | Aufnahmesystem |
| 20 | Umgebung |
| 22 | Wärmespeichermittel |
| 23 | Wärmespeicherraum |
| 24 | Schüttung |
| 25 | Schüttungselement |
| 26 | Pore |
| 27 | Arbeitsfluid |
| 28 | Ausgleichselement |
| 29 | Ausgleichselement |
| 30 | Ausgleichselement |

| 31 | verbleibendes Schüttungselement |
| 32 | Ebene |
| 33 | Wärmespeicher |
| 34 | Stahlkappe |
| 35 | Betonkappe |
| 36 | Zwischenboden |

**Patentansprüche**

1. Wärmespeichermittel (22) zum Austausch von Wärme mit einem Arbeitsfluid (27) sowie zur wenigstens zeitweiligen Speicherung der Wärme von deren Zufuhr bis zu deren Entnahme durch das Arbeitsfluid (27), wobei die Wärmespeichermittel (22) eine Schüttung (24) aus einander berührenden Schüttungselementen (25) umfassen, zwischen denen die Schüttung (24) miteinander kommunizierende, durchgehende Poren (26) aufweist, welche von dem Arbeitsfluid (27) zumindest zeitweilig durchströmt werden,
**dadurch gekennzeichnet,**
**dass** zumindest ein Teil der Schüttungselemente (25) als Ausgleichselemente (28, 29, 30) ausgeführt sind, welche Bewegungsmöglichkeiten der Schüttungselemente (25) in der Schüttung (24) schaffen und so eine gegenseitige Zerstörung der Schüttungselemente (25) aufgrund von Volumenänderungen verursacht durch Temperaturänderungen der Wärmespeichermittel (22) verhindern.

2. Wärmespeicher (33) mit mindestens einem Wärmespeichermittel (22) beherbergenden und zum Austausch von Wärme mit den Wärmespeichermitteln (22) zumindest zeitweilig von einem Arbeitsfluid (27) durchströmten Wärmespeicherraum (23), wobei die Wärmespeichermittel (22) eine Schüttung (24) aus einander berührenden Schüttungselementen (24) umfassen, zwischen denen die Schüttung (24) miteinander kommunizierende, durchgehende Poren (26) aufweist, welche von dem Arbeitsfluid (27) zumindest zeitweilig durchströmt werden,
**dadurch gekennzeichnet,**
**dass** zumindest ein Teil der Schüttungselemente (25) als Ausgleichselemente (28, 29, 30) ausgeführt sind, welche Bewegungsmöglichkeiten der Schüttungselemente (25) in der Schüttung (24) schaffen und so eine gegenseitige Zerstörung der Schüttungselemente (25) und/oder eine Zerstörung zumindest eines Teils der Wandungen des Wärmespeicherraums (23) aufgrund von Volumenänderungen verursacht durch Temperaturänderungen der Wärmespeichermittel (22) verhindern.

3. Wärmespeichermittel oder Wärmespeicher nach Anspruch 1 oder 2,
**dadurch gekennzeichnet,**
**dass** zumindest ein Teil der Ausgleichselemente (28, 29, 30) eine reibungsoptimierte Oberfläche aufweisen, welche es den Schüttungselementen (25) bei Volumenänderungen aufgrund von Temperaturänderungen untereinander erlaubt, gegen den statischen Druck in der Schüttung (24) Ausweichbewegungen relativ zueinander auszuführen.

4. Wärmespeichermittel oder Wärmespeicher nach Anspruch 3,
**dadurch gekennzeichnet,**
**dass** die reibungsoptimierte Oberfläche als eine einen Kern eines Ausgleichselements (28, 29, 30) umhüllende Beschichtung hergestellt ist.

5. Wärmespeichermittel oder Wärmespeicher nach einem der Ansprüche 1 bis 4,
**dadurch gekennzeichnet,**
**dass** zumindest ein Teil der Ausgleichselemente (28, 29, 30) zumindest an ihrer Oberfläche aus einem temperaturbeständigen und auftretende Reibungskräfte zwischen einander berührender Kontaktflächen benachbarter Schüttungselemente (25) derart gering haltenden Werkstoff oder Werkstoffgemisch bestehen, so dass sich eine beim Abkühlen gesetzte Schüttung (24) beim Wiederaufheizen und Ausdehnen entspannen kann, ohne dass die Schüttungselemente (25) untereinander verkeilen.

6. Wärmespeichermittel oder Wärmespeicher nach Anspruch 5,
**dadurch gekennzeichnet,**
**dass** zumindest ein Teil der Ausgleichselemente (28, 29, 30) zumindest an ihrer Oberfläche aus Graphit bestehen.

7. Wärmespeichermittel oder Wärmespeicher nach einem der vorhergehenden Ansprüche,
**dadurch gekennzeichnet**
**dass** zumindest ein Teil der Ausgleichselemente (28, 29, 30) zumindest im Temperatureinsatzbereich der Wärmespeichermittel (22) derart elastisch sind, dass die innerhalb einer Ebene (32) der Schüttung (24) liegenden Ausgleichselemente (28, 29, 30) durch Temperaturänderungen verursachte Volumenänderungen der verbleibenden Schüttungselemente (31) innerhalb der Ebene (32) durch eigene elastische Deformation zu kompensieren in der Lage sind.

8. Wärmespeichermittel oder Wärmespeicher nach einem der vorhergehenden Ansprüche,
**dadurch gekennzeichnet**
**dass** zumindest ein Teil der Ausgleichselemente (28, 29, 30) zumindest im Temperatureinsatzbereich der Wärmespeichermittel (22) derart plastisch deformierbar sind, dass die innerhalb einer Ebene (32) der Schüttung (24) liegenden Ausgleichselemente (28, 29, 30) durch Temperaturänderungen verursachte Volumenänderungen der verbleibenden Schüttungselemente (31) innerhalb der Ebene (32) durch eigene plastische Deformation zu kompensieren in der Lage sind.

9. Wärmespeichermittel oder Wärmespeicher nach Anspruch 7 oder 8,
   **dadurch gekennzeichnet,**
   **dass** zumindest ein Teil der Ausgleichselemente (28, 29, 30) zumindest einen Kern oder eine einen Kern umgebende Umhüllung aus einem vornehmlich elastischen und/oder plastisch deformierbaren Werkstoff aufweisen.

10. Wärmespeichermittel oder Wärmespeicher nach einem der vorhergehenden Ansprüche,
    **dadurch gekennzeichnet,**
    **dass** wenigstens ein Teil der Schüttungselemente (25) zumindest teilweise aus einem Keramikmaterial bestehen.

11. Wärmespeichermittel oder Wärmespeicher nach einem der vorhergehenden Ansprüche,
    **dadurch gekennzeichnet,**
    **dass** wenigstens ein Teil der Schüttungselemente (25) zumindest teilweise aus Eisen und/oder Stahl bestehen.

12. Wärmespeichermittel oder Wärmespeicher nach einem der vorhergehenden Ansprüche,
    **dadurch gekennzeichnet,**
    **dass** wenigstens ein Teil der Schüttungselemente (25) zumindest zum Teil gebrochenes Naturmaterial umfassen.

13. Wärmespeichermittel oder Wärmespeicher nach einem der vorhergehenden Ansprüche,
    **dadurch gekennzeichnet,**
    **dass** wenigstens ein Teil der Schüttungselemente (25) kugelförmig sind.

14. Wärmespeichermittel oder Wärmespeicher nach einem der vorhergehenden Ansprüche,
    **dadurch gekennzeichnet,**
    **dass** der Raumfüllungsgrad der Schüttung (24) bevorzugt kleiner gleich $\pi / 3\sqrt{2} \approx 0{,}74048 \approx 74\%$ ist.

15. Wärmespeichermittel oder Wärmespeicher nach einem der vorhergehenden Ansprüche,
    **dadurch gekennzeichnet,**
    **dass** die Schüttung (24) eine Porosität von bis zu 45% aufweist, besonders bevorzugt von 38% bis 42%.

**Geänderte Patentansprüche gemäss Regel 137(2) EPÜ.**

1. Wärmespeichermittel (22) zum Austausch von Wärme mit einem Arbeitsfluid (27) sowie zur wenigstens zeitweiligen Speicherung der Wärme von deren Zufuhr bis zu deren Entnahme durch das Arbeitsfluid (27), wobei die Wärmespeichermittel (22) eine Schüttung (24) aus einander berührenden Schüttungselementen (25) umfassen, zwischen denen die Schüttung (24) miteinander kommunizierende, durchgehende Poren (26) aufweist, welche von dem Arbeitsfluid (27) zumindest zeitweilig durchströmt werden, wobei zumindest ein Teil der Schüttungselemente (25) als Ausgleichselemente (28, 29, 30) ausgeführt sind,
   **dadurch gekennzeichnet,**
   **dass** die Ausgleichselemente (28, 29, 30) gegenseitige Bewegungsmöglichkeiten der Schüttungselemente (25) in der Schüttung (24) schaffen und so:

   - eine gegenseitige Zerstörung der Schüttungselemente (25) aufgrund von Volumenänderungen verursacht durch Temperaturänderungen der Wärmespeichermittel (22) verhindern, sowie
   - ein Entspannen einer in ihrer Ausdehnung z.B. zur Seite und nach unten begrenzten Schüttung (24) erlauben.

2. Wärmespeicher (33) mit mindestens einem Wärmespeichermittel (22) beherbergenden und zum Austausch von Wärme mit den Wärmespeichermitteln (22) zumindest zeitweilig von einem Arbeitsfluid (27) durchströmten, z.B. zur Seite und nach unten durch Wandungen begrenzten Wärmespeicherraum (23), wobei die Wärmespeichermittel (22) eine Schüttung (24) aus einander berührenden Schüttungselementen (24) umfassen, zwischen denen die Schüttung (24) miteinander kommunizierende, durchgehende Poren (26) aufweist, welche von dem Arbeitsfluid (27) zumindest zeitweilig durchströmt werden,
   **gekennzeichnet durch**
   Wärmespeichermittel nach Anspruch 1, wobei die Ausgleichselemente ein Entspannen der in ihrer Ausdehnung z.B. zur Seite und nach unten **durch** die Wandungen des Wärmespeicherraums (23) begrenzten Schüttung (24) erlauben.

3. Wärmespeichermittel oder Wärmespeicher nach Anspruch 1 oder 2,
   **dadurch gekennzeichnet,**
   **dass** zumindest ein Teil der Ausgleichselemente (28, 29, 30) eine reibungsoptimierte Oberfläche aufweisen, welche es den Schüttungselementen (25) bei Volumenänderungen aufgrund von Temperaturänderungen untereinander erlaubt, gegen den statischen Druck in der Schüttung (24) Ausweichbewegungen relativ zueinander auszuführen.

4. Wärmespeichermittel oder Wärmespeicher nach Anspruch 3,
**dadurch gekennzeichnet,**
**dass** die reibungsoptimierte Oberfläche als eine einen Kern eines Ausgleichselements (28, 29, 30) umhüllende Beschichtung hergestellt ist.

5. Wärmespeichermittel oder Wärmespeicher nach einem der Ansprüche 1 bis 4,
**dadurch gekennzeichnet,**
**dass** zumindest ein Teil der Ausgleichselemente (28, 29, 30) zumindest an ihrer Oberfläche aus einem temperaturbeständigen und auftretende Reibungskräfte zwischen einander berührender Kontaktflächen benachbarter Schüttungselemente (25) derart gering haltenden Werkstoff oder Werkstoffgemisch bestehen, so dass sich eine beim Abkühlen gesetzte Schüttung (24) beim Wiederaufheizen und Ausdehnen entspannen kann, ohne dass die Schüttungselemente (25) untereinander verkeilen.

6. Wärmespeichermittel oder Wärmespeicher nach Anspruch 5,
**dadurch gekennzeichnet,**
**dass** zumindest ein Teil der Ausgleichselemente (28, 29, 30) zumindest an ihrer Oberfläche aus Graphit bestehen.

7. Wärmespeichermittel oder Wärmespeicher nach einem der vorhergehenden Ansprüche,
**dadurch gekennzeichnet**
**dass** zumindest ein Teil der Ausgleichselemente (28, 29, 30) zumindest im Temperatureinsatzbereich der Wärmespeichermittel (22) derart elastisch sind, dass die innerhalb einer Ebene (32) der Schüttung (24) liegenden Ausgleichselemente (28, 29, 30) durch Temperaturänderungen verursachte Volumenänderungen der verbleibenden Schüttungselemente (31) innerhalb der Ebene (32) durch eigene elastische Deformation zu kompensieren in der Lage sind.

8. Wärmespeichermittel oder Wärmespeicher nach einem der vorhergehenden Ansprüche,
**dadurch gekennzeichnet**
**dass** zumindest ein Teil der Ausgleichselemente (28, 29, 30) zumindest im Temperatureinsatzbereich der Wärmespeichermittel (22) derart plastisch deformierbar sind, dass die innerhalb einer Ebene (32) der Schüttung (24) liegenden Ausgleichselemente (28, 29, 30) durch Temperaturänderungen verursachte Volumenänderungen der verbleibenden Schüttungselemente (31) innerhalb der Ebene (32) durch eigene plastische Deformation zu kompensieren in der Lage sind.

9. Wärmespeichermittel oder Wärmespeicher nach Anspruch 7 oder 8,
**dadurch gekennzeichnet,**
**dass** zumindest ein Teil der Ausgleichselemente (28, 29, 30) zumindest einen Kern oder eine einen Kern umgebende Umhüllung aus einem vornehmlich elastischen und/oder plastisch deformierbaren Werkstoff aufweisen.

10. Wärmespeichermittel oder Wärmespeicher nach einem der vorhergehenden Ansprüche,
**dadurch gekennzeichnet,**
**dass** wenigstens ein Teil der Schüttungselemente (25) zumindest teilweise aus einem Keramikmaterial bestehen.

11. Wärmespeichermittel oder Wärmespeicher nach einem der vorhergehenden Ansprüche,
**dadurch gekennzeichnet,**
**dass** wenigstens ein Teil der Schüttungselemente (25) zumindest teilweise aus Eisen und/oder Stahl bestehen.

12. Wärmespeichermittel oder Wärmespeicher nach einem der vorhergehenden Ansprüche,
**dadurch gekennzeichnet,**
**dass** wenigstens ein Teil der Schüttungselemente (25) zumindest zum Teil gebrochenes Naturmaterial umfassen.

13. Wärmespeichermittel oder Wärmespeicher nach einem der vorhergehenden Ansprüche,
**dadurch gekennzeichnet,**
**dass** wenigstens ein Teil der Schüttungselemente (25) kugelförmig sind.

14. Wärmespeichermittel oder Wärmespeicher nach einem der vorhergehenden Ansprüche,
**dadurch gekennzeichnet,**
**dass** der Raumfüllungsgrad der Schüttung (24) bevorzugt kleiner gleich

$$\pi / 3\sqrt{2} \approx 0{,}74048 \approx 74\% \text{ ist.}$$

15. Wärmespeichermittel oder Wärmespeicher nach einem der vorhergehenden Ansprüche,
**dadurch gekennzeichnet,**
**dass** die Schüttung (24) eine Porosität von bis zu 45% aufweist, besonders bevorzugt von 38% bis 42%.

Fig. 1

Fig. 2

Fig. 3

Fig. 4

Fig. 5

Fig. 6 a)

Fig. 6 b)

Fig. 7

**EP 2 578 979 A1**

Europäisches
Patentamt

European
Patent Office

Office européen
des brevets

## EUROPÄISCHER RECHERCHENBERICHT

**Nummer der Anmeldung**

EP 11 18 4259

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2007 002797 A1 (ALZCHEM TROSTBERG GMBH [DE]) 24. Juli 2008 (2008-07-24) <br> * Absatz [0019] * <br> * Absatz [0020] * <br> * Absatz [0026] * <br> ----- | 1-15 | INV. <br> F28D17/00 <br> F28D20/00 |
| X | GB 2 173 886 A (MITSUBISHI CORP MITSUBISHI CORP [JP]) 22. Oktober 1986 (1986-10-22) <br> * Satz 26 - Satz 30 * <br> ----- | 1 | |
| A | US 4 809 771 A (KENNEL ELLIOT B [US] ET AL) 7. März 1989 (1989-03-07) <br> * Abbildung 2 * <br> ----- | 1-15 | |
| A | DE 197 49 793 A1 (BEHR GMBH & CO [DE]) 12. Mai 1999 (1999-05-12) <br> * Zusammenfassung * <br> ----- | 1-15 | |
| A | US 4 286 141 A (MACCRACKEN CALVIN D) 25. August 1981 (1981-08-25) <br> * das ganze Dokument * <br> ----- | 1-15 | RECHERCHIERTE SACHGEBIETE (IPC) <br><br> F28D |

Der vorliegende Recherchenbericht wurde für alle Patentansprüche erstellt

| Recherchenort | Abschlußdatum der Recherche | Prüfer |
|---|---|---|
| München | 13. Januar 2012 | Bain, David |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.........................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 18 4259

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-01-2012

| Im Recherchenbericht angeführtes Patentdokument | Datum der Veröffentlichung | Mitglied(er) der Patentfamilie | Datum der Veröffentlichung |
|---|---|---|---|
| DE 102007002797 A1 | 24-07-2008 | DE 102007002797 A1<br>EP 2115089 A2<br>WO 2008087033 A2 | 24-07-2008<br>11-11-2009<br>24-07-2008 |
| GB 2173886 A | 22-10-1986 | GB 2173886 A<br>JP 1873664 C<br>JP 5081832 B<br>JP 61208493 A | 22-10-1986<br>26-09-1994<br>16-11-1993<br>16-09-1986 |
| US 4809771 A | 07-03-1989 | KEINE | |
| DE 19749793 A1 | 12-05-1999 | KEINE | |
| US 4286141 A | 25-08-1981 | CA 1114701 A1<br>US 4286141 A | 22-12-1981<br>25-08-1981 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1857614 A2